(19)

Europäisches
Patentamt
European
Patent Office
Office européen
des brevets

(11) **EP 2 006 709 B1**

(12) **EUROPEAN PATENT SPECIFICATION**

(45) Date of publication and mention
of the grant of the patent:
**14.04.2010 Bulletin 2010/15**

(51) Int Cl.:
***G01S 13/34*** *(2006.01)* *G01S 13/02* *(2006.01)*

(21) Application number: **07252352.5**

(22) Date of filing: **11.06.2007**

(54) **Object detection**

Objekterkennung

Détection d'objets

(84) Designated Contracting States:
**DE FR GB**

(43) Date of publication of application:
**24.12.2008 Bulletin 2008/52**

(73) Proprietors:
- **Mitsubishi Electric Information Technology Centre**
**Europe B.V.**
**Guildford, Surrey GU2 5YD (GB)**
Designated Contracting States:
**GB**
- **MITSUBISHI ELECTRIC CORPORATION**
**Chiyoda-ku**
**Tokyo 100-8310 (JP)**
Designated Contracting States:
**DE FR**

(72) Inventor: **Szajnowski, Wieslaw Jerzy**
**Guildford**
**Surrey, GU1 2AR (GB)**

(74) Representative: **Burke, Steven David et al**
**R.G.C. Jenkins & Co**
**26 Caxton Street**
**London SW1H 0RJ (GB)**

(56) References cited:
**US-A- 3 109 172      US-A- 5 345 470**
**US-A1- 2004 130 482**

**Description**

BACKGROUND OF THE INVENTION

**Field of the invention**

This invention relates to a method and apparatus for the generation of waveforms suitable for use in object detection and ranging, for example by modulating the carrier frequency of a microwave radar. The invention is particularly suited for systems operating in environments with high levels of noise and interference, and is especially, but not exclusively, applicable to automotive FMCW radar intended to operate in multi-user scenarios.

**Background of the invention**

The growing demand for autonomous cruise control and collision warning/avoidance systems has stimulated the development of frequency-modulated continuous-wave (FMCW) automotive radar. Most of these radars under development operate in the 77-GHz band, which has been reserved for these applications.

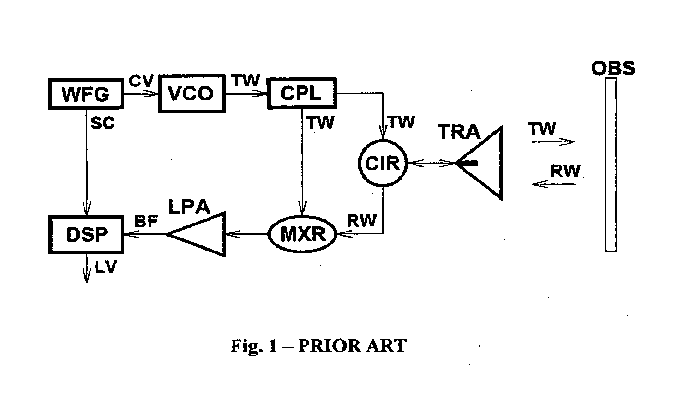

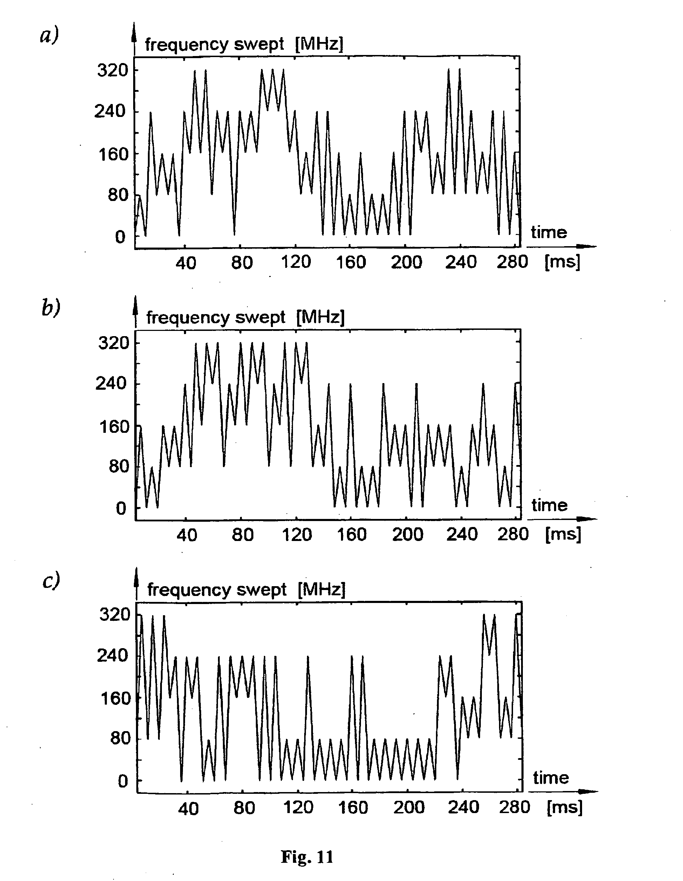

A functional block diagram of FMCW radar is depicted in Fig. 1. The system comprises a triangular waveform generator WFG, a voltage-controlled oscillator VCO acting also as an up-converter, a coupler CPL, a circulator CIR to provide a single-antenna operation, a transmit-receive antenna TRA, a mixer MXR, a low-pass filter/amplifier LPA, and a digital signal processor DSP.

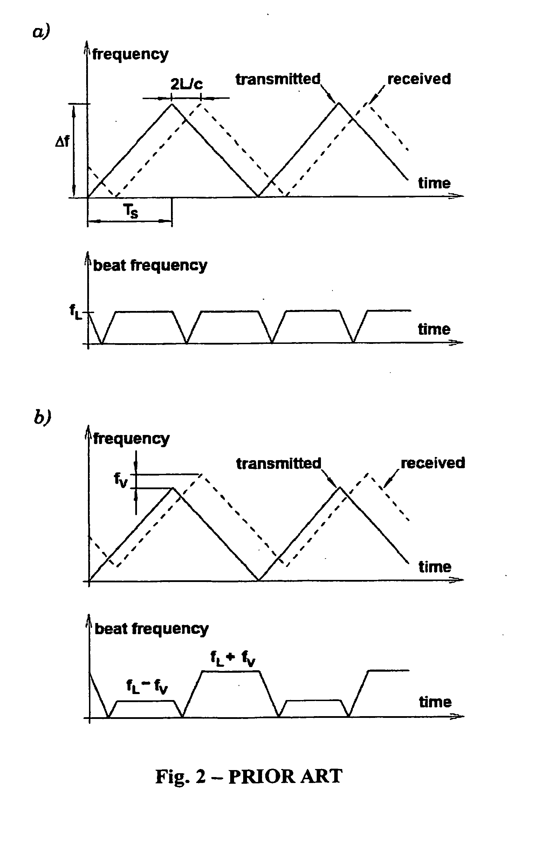

The triangular waveform generator WFG produces a control signal CV to vary the frequency of the voltage-controlled oscillator VCO in a triangular fashion. A resulting waveform TW transmitted by the antenna TRA has a constant amplitude but its frequency sweeps the band $\Delta f$ during each sweep interval $T_s$, as depicted schematically in Fig. 2a).

The echo RW from an obstacle OBS at range L will be an attenuated copy of the transmitted waveform TW, delayed in time by $\tau = 2L/c$, where c is the speed of light. The echo RW is mixed in the mixer MXR with a portion of the transmitted waveform TW supplied by the coupler CPL. The output signal of the mixer MXR is amplified and filtered in the low-pass filter/amplifier LPA to produce a *beat* signal BF whose frequency $f_L$ is directly proportional to obstacle range

$$f_L = 2 \, L \, \Delta f /(c \; T_S)$$

or

$$f_L = 2 \, L \, S_{FM} /c$$

where $S_{FM} = \Delta f / T_s$ is the slope of frequency sweep. It should be pointed out that in order to determine range, the precise value of the slope $S_{FM}$ must be known.

Fig. 2a) shows, schematically, linear frequency variations of both the transmitted and the received waveforms, and also the resulting beat frequency. As seen, the beat frequency $f_L$ is constant except at the extremes of the sweeps (this effect is negligible in practice).

A relative movement with velocity V between the radar and obstacle will superimpose on the beat frequency $f_L$ a Doppler frequency shift

$$f_V = 2 \, V \, f_C / c$$

where $f_C$ is the radar carrier frequency. Usually, the carrier frequency $f_C$ is much greater than the band $\Delta f$ of the frequency sweep; hence, in practice, the Doppler shift $f_V$ is not affected by frequency modulation.

Fig. 2b) illustrates the case, in which a received waveform is delayed and Doppler-shifted with respect to the transmitted waveform. For an obstacle approaching the radar with velocity V, the Doppler shift $f_V$ will decrease the observed beat frequency during the frequency up-sweep, whereas the observed beat frequency will be increased during the frequency down-sweep.

The digital signal processor DSP combines up-sweep and down-sweep beat frequencies to determine both the range L and the relative velocity V of an obstacle. Estimated values of range L and velocity V are produced at output LV of the processor DSP. For correct operation, the signal processor DSP receives from the waveform generator WFG a synchronizing pulse SC indicative of the beginning and direction of each frequency sweep.

In the field of automotive radar, research and development effort has been concentrated mostly on hardware demonstrations of required functionality and potential performance. However, it appears that the important issue of resistance to mutual interference has been somewhat neglected.

Some studies (David Richardson: An FMCW radar sensor for collision avoidance. IEEE Conference on Intelligent Transportation System, ITSC-97, 9-12 Nov. 1997, pp. 427-432) have shown that there could be up to 1,600 automotive radars operating during freeway traffic condition, which may act as mutual interferers, when all or most cars have radars. Therefore, until the issue of resistance to multi-user interference has been resolved, automotive radar will not become a wide-scale commercial success.

An analysis presented in Graham M. Brooker: Mutual Interference of Millimeter-Wave Radar Systems. IEEE Transactions on Electromagnetic Compatibility, EC-49, Feb. 2007, pp. 170-181 has concluded that all of the commonly used modulation schemes are susceptible to multi-user interference. Furthermore, although some forms of interference can be identified and suppressed, there are others which are impossible to control, resulting in inferior obstacle detection and poor estimation of its range and velocity.

US-A-5923280 discloses an automotive radar system which uses a randomisation procedure for determining the initial start time, the initial start frequency and the order of a sequence of frequencies which is repeatedly emitted. The Doppler shift in the reflected and received signal is estimated by performing a spectral analysis of similar frequency components and is then removed from the received signal. The received signal is then reordered into a linear sequence and is compared with a similarly reordered image of the transmitted signal so as determine the range to the target.

US-A-2004/0130482 discloses a FMCW radar system in which the generated signal has a frequency which is swept upwards from a start frequency and then downwards back to the start frequency. A randomly-generated variable time delay is inserted between sweep intervals to reduce interference between different systems. The peak frequency (and hence the sweep slope) are adjusted in a deterministic manner according to a detected beat frequency in order to maintain the beat frequency within a particular range. The disclosed arrangement would result in inefficient use of the transmission bandwidth.

US-A-5345470 discloses an FMCW radar system which outputs a waveform comprising successive frequency excursions having positive but differing frequency/time modulation slopes and differing centre frequencies for each frequency excursion. Successive slopes and centre frequencies may be obtained stochastically, in order to reduce interference.

A further prior art system is disclosed in US 3 109 172.

It would be desirable to provide a method and apparatus for FMCW waveform design and generation that would result in improved resistance to multi-user interference, especially in automotive FMCW radar.

SUMMARY OF THE INVENTION

Aspects of the invention are set out in the accompanying claims.

According to another aspect of the invention, an object ranging system operates by transmitting frequency sweeps (which preferably alternate up and down) having randomly distributed slopes as a result of random selection of local frequency peaks and valleys according to predetermined probability tables, and determining the beat frequency obtained when combining the transmitted signal with its reflection from an object.

In accordance with a further, preferred aspect of the invention, the frequency of a transmitter employed in an automotive frequency-modulated continuous-wave (FMCW) radar system is varied in time in a piecewise-linear, yet non-deterministic and irregular, 'zigzag' fashion, so arranged as to exploit the maximum spread of available or allocated frequency band $\Delta F$.

Such an arrangement will ensure an enhanced resistance to mutual in-band interference caused by other users operating in the same region and sharing the same frequency band $\Delta F$. This is because, as will be clear from the description set out below, there is a low probability that users will be emitting similar frequencies at the same time. Because of the limited bandwidth of the processing circuitry, e.g. the low pass filter/amplifier LPA of Fig. 1, significantly different frequencies will be rejected. Even if two transmitters generate crossing frequency/time slopes, the mutual interference will be very brief and non-repetitive, and therefore cause little if any problem. In the unlikely event that two transmitters are generating signals with the same frequency/time slope at the same time, significant interference would occur only if the starting times of the slopes are substantially the same, which is significantly more unlikely. Furthermore, even this remote possibility would cause non-repetitive interference for only a brief period lasting for the length of the slope. Either of the aforementioned transient interference effects could be mitigated by integrating the range estimates over one, or preferably a plurality, of slopes, for example using a sliding-window technique.

The above advantages can be achieved without affecting the basic functions of automotive radar, i.e., determination of obstacle range and velocity.

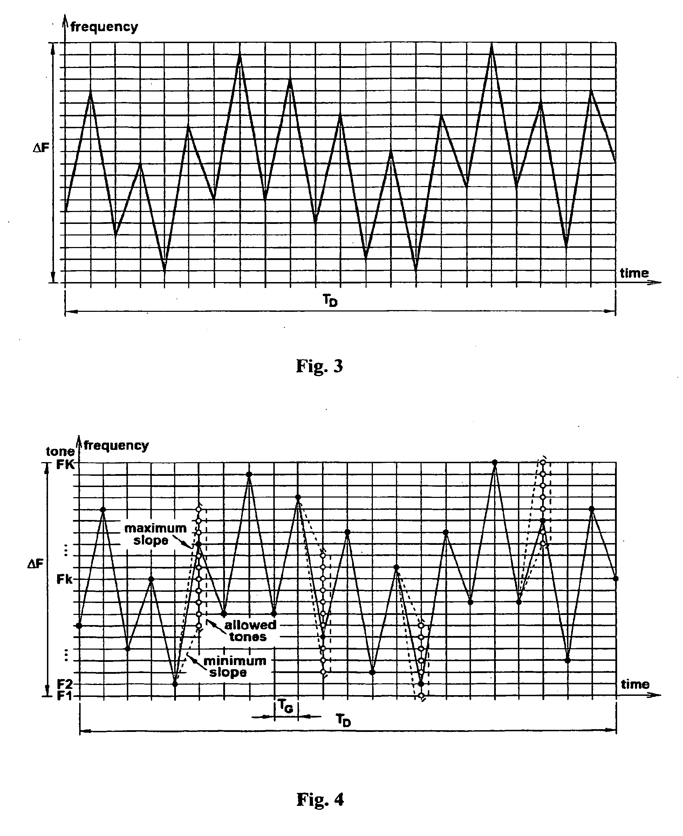

Fig. 3 is an example of an invented pattern of frequency variation suitable for modulation of a carrier used in a multi-user automotive FMCW radar system. The modulating signal has a frequency/time pattern with local extrema comprising local maxima (peaks) and local minima (valleys). The parts of the signal between adjacent local extrema can be regarded as respective signal portions, and in the preferred embodiment each signal portion has a start frequency equal to the end frequency of the preceding signal portion.

According to probabilistic terminology, the preferred pattern of frequency variation in time, as exemplified in Fig. 3, may be regarded as a random frequency walk that follows an especially constructed Markov chain (MC).

The walk is limited in frequency as the frequency values must remain within a predetermined band $\Delta F$. Furthermore, because the observation time interval $T_D$ is always limited, only a finite single segment of the walk will be used each time for practical measurements.

An MC-based frequency walk with piecewise-linear frequency change suitable for an FMCW automotive system may be constructed as follows. First, a discrete-time parameter n is defined by consecutive time instants, separated by predetermined time intervals $T_G$; it is convenient, although not necessary, to use a constant value for the interval $T_G$.

It may appear that utilizing non-uniform and/or variable time intervals $T_G$ will improve resistance to mutual in-band interference; however, such a complication is not always necessary because the master clocks of independent systems are not synchronized (as each system is started at an arbitrary time even though the clocking circuitry may be mass-produced). Consequently, in a resulting asynchronous mode, the time intervals $T_G$ of different users will almost never coincide: they will appear as being shifted in time continuously with respect to one another.

Second, a number K of distinct frequency values are selected within the maximum available frequency band $\Delta F$. If F1 and FK denote, respectively, the minimum and maximum frequency value, then $\Delta F = FK - F1$, and the frequencies may be selected as F1 < F2 < ... < Fk < ... < FK. It may be convenient, although not necessary, to distribute the frequencies uniformly between the extreme values, F1 and FK. Each of those selected frequencies (including F1 and FK) may be regarded as the *state* of an MC-based frequency walk.

During each time interval $T_G$, a transition has to be made from a current state (frequency) Fi, at time n, to a next state (frequency) Fj, at time (n+1), where F1 ≤ Fi, Fj ≤ FK. Each transition is accomplished by varying the frequency monotonically, for example linearly, up or down, between the respective states, i.e., from frequency Fi to frequency Fj. For efficient determination of the obstacle range and velocity, it is advantageous to alternate the direction (up/down) of the frequency variation at consecutive time intervals $T_G$.

The maximum and the minimum rate of frequency change (the slope) are preferably both limited to some predetermined values. The steepest slope should not exceed the fastest frequency sweep physically achievable in a generator employed by the system. On the other hand, the value of the minimum admissible slope (or at least the difference between the start and end frequencies of the signal portion) will be determined by the required resolution of range measurements.

For example, if the maximum spread of available frequency band $\Delta F$ is 320 MHz, and the time interval $T_G$ is equal to 4 ms, then the minimum frequency excursion during the time $T_G$ will be equal to at least 80 MHz, and the maximum frequency excursion may be limited to, say, 240 MHz.

For a more comprehensive understanding of the invention, it may be helpful to view the K frequencies (states) involved as K *tones.* Then, using music terminology, each state transition can be regarded as a *glissando,* i.e., a continuous slide upwards or downwards in frequency between two consecutive tones.

In accordance with a preferred embodiment of the invention, for each current tone Fi at time n, the next tone Fj, at time (n+1), is selected in a non-deterministic manner from a set of allowed tones {Fj}, and the selection mechanism is so constructed as to:

   (a) keep the resulting frequency-walk values within the allocated frequency range (F1, FK);
   (b) at each selection, reverse the sign of the frequency/time slope; and
   (c) ensure that the absolute magnitude of the slope is kept within a predetermined range.

Accordingly, for each current tone Fi two subsets of *allowed* next tones will be required: one subset if the frequency is being increased, and another subset if the frequency is being decreased. Therefore, a next higher tone Fj, where j > i, will be reached by applying an up-glissando Gij. Similarly, a next lower tone Fj, where j < i, will be reached by applying a down-glissando Gij.

For illustrative purposes, Fig. 4 depicts schematically an example of the allowed next tones for some selected tone.

Each of the glissandos (up or down) Gij allowed by the constraints of the selection process is selected with a predetermined probability Pij, which is the probability of a transition from a current tone Fi to a next tone Fj; obviously, for up-glissandos, j > i, and for down-glissandos, j < i. It should be pointed out that the relation j = i is not allowed as the frequency must change between consecutive time instants n and (n+1).

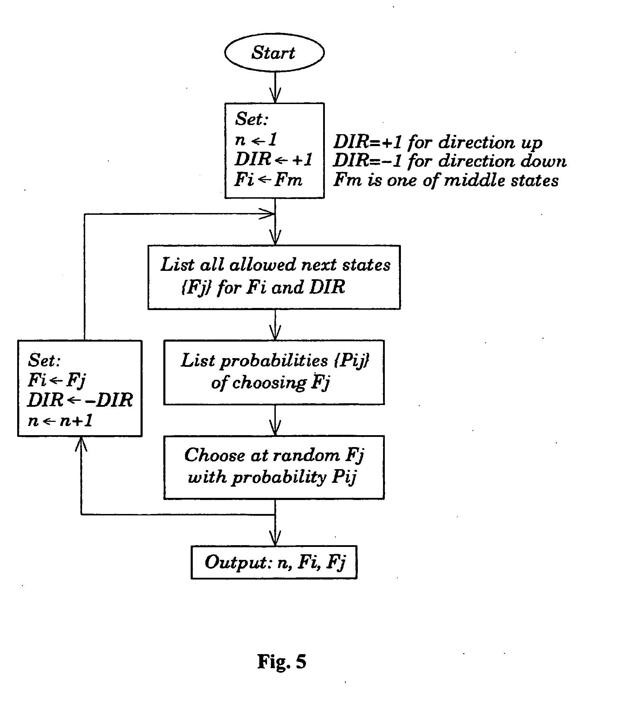

A flowchart in Fig. 5 shows the type and order of operations that are needed to implement the invention in its basic form. After the start of the procedure, a counter n, which counts the frequency/time slope direction changes, is set to 1. An initial value of a variable DIR (which takes the values + 1 to represent an increasing slope and - 1 to represent a decreasing slope) is set to, e.g., +1. An initial value of a variable Fi, representing the slope start frequency, is set to an intermediate frequency Fm.

In the following step, a list of the possible next states{Fj}, i.e. the possible end frequencies of the frequency-time slope to be generated, is determined. This list will be dependent upon the current values of Fi and DIR.

In the following step, the probabilities of selecting each of the possible next states {Fj} are determined, e.g. from a look-up table. These probabilities {Pij} will be dependent upon the current state Fi, the variable DIR (which may be used to choose between two lookup tables) and the respective next state Fj.

In the following step, the next state Fj is selected at random and in accordance with the set of probabilities {Pij}.

Then, the values n, Fi, Fj are outputted for the purpose of generating the next signal portion.

Subsequently, in preparation for outputting the next slope, the start frequency Fi is set to the previously-determined end frequency Fj, the slope sign indicator DIR has its sign reversed, and the counter n is incremented. The next signal portion is then determined using the procedure described above, starting with the determination of the allowed next states {Fj} for the current values of Fi and DIR.

*Example*

In order to facilitate the understanding of the steps involved in the design of a frequency walk in accordance with the invention, an illustrative example of a suitable, yet simple, design is presented below.

Assume that time intervals $T_G$ between consecutive time instants n are equal, and that five selected tones,

$$F1 < F2 < F3 < F4 < F5,$$

have been spread uniformly with equal frequency difference

$$(F5 - F1)/4 = \Delta F/4$$

between adjacent tones.

Suppose also that only glissandos (up or down) with the three slopes: $\Delta F/(4T_G)$, $\Delta F/(2T_G)$ and $3\Delta F/(4T_G)$, are allowed. For example, if $\Delta F = 320$ MHz and $T_G = 4$ ms, then the allowed slopes are: 20 MHz/ms, 40 MHz/ms and 60 MHz/ms.

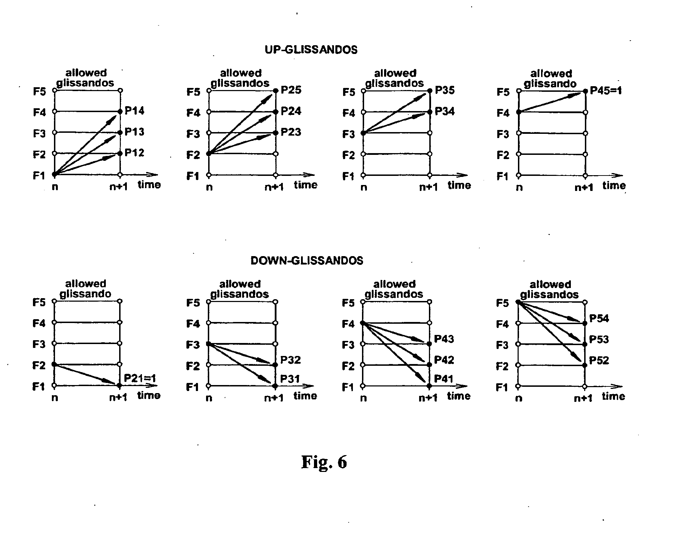

Fig. 6 depicts allowed up-glissandos, Gij with j > i, and down-glissandos, Gij with j < i, that can be used for the design of a frequency walk; also shown are probabilities Pij with which a particular glissando Gij is to be selected.

Allowed next tones {Fj} for each current tone Fi are listed in the table below.

| current tone | allowed next tones to be reached through: | |
|---|---|---|
| | up-glissandos | down-glissandos |
| F1 | F2, F3, F4 | none |
| F2 | F3, F4, F5 | F1 |
| F3 | F4, F5 | F1, F2 |
| F4 | F5 | F1, F2, F3 |
| F5 | none | F2, F3, F4 |

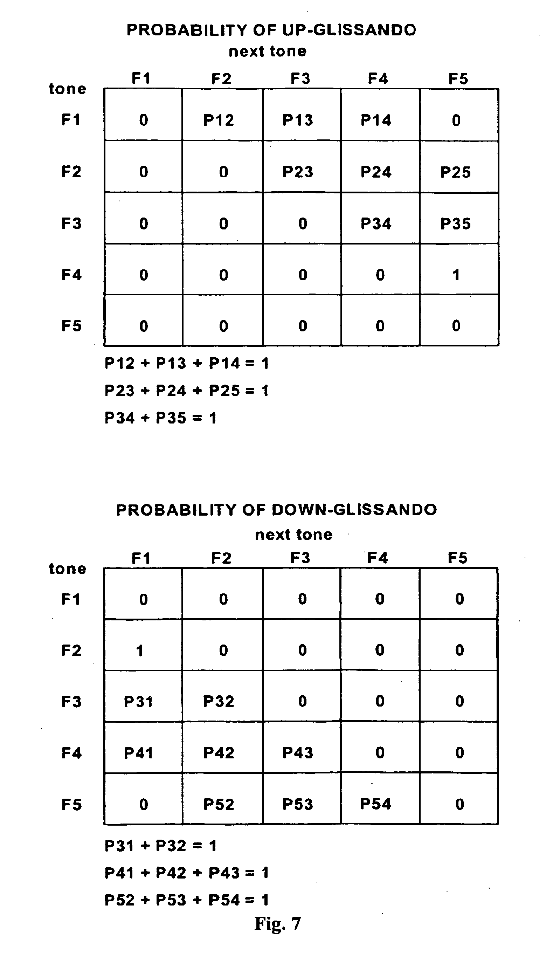

Two tables in Fig. 7 show, in a matrix form, probabilities Pij with which allowed up-glissandos and down-glissandos are to be selected. Each frequency has a set of probabilities, one subset in each of the two tables respectively associated with up-glissandos and down-glissandos. The probability used for the current selection depends on (and preferably *only* on) the current frequency and the intended sign of the slope (which is determined by the sign of the preceding slope). In order to obtain the benefit of good utilization of the signal bandwidth, at least some, and preferably all, the frequencies have at least two non-zero probabilities in their respective probability sets, and at least some have at least two non-zero probabilities in the probability sub-set associated with a particular slope sign.

As seen, the sum of probabilities of all allowed glissandos that originate from any given state must be equal to one; for example,

$$P12 + P13 + P14 = 1$$

Furthermore, if there is only one allowed glissando, for example up-glissando G45 from tone F4 to tone F5, such a glissando must occur with probability one (a deterministic choice).

In accordance with still another aspect of the invention, a symmetric distribution of all the five tones, i.e., $P(T1)$ = $P(T5)$ and $P(T2) = P(T4)$, can be obtained, if 'similar' glissandos and also glissandos with a 'mirror symmetry' are selected with equal probabilities; hence,

$$P12 = P54 = a, P13 = P53 = b, \qquad P14 = P52 = 1 - a - b$$

$$P23 = P43 = a, P24 = P42 = b, \qquad P25 = P41 = 1 - a - b$$

$$P34 = P32 = c, P35 = P31 = 1 - c$$

Consequently, only three probabilities, a, b and c, need to be chosen in order to specify completely the two probability matrices: one for up-glissandos, and another one for down-glissandos. The above assumption greatly simplifies the design procedure of a frequency walk, and also leads to better spectrum utilization.

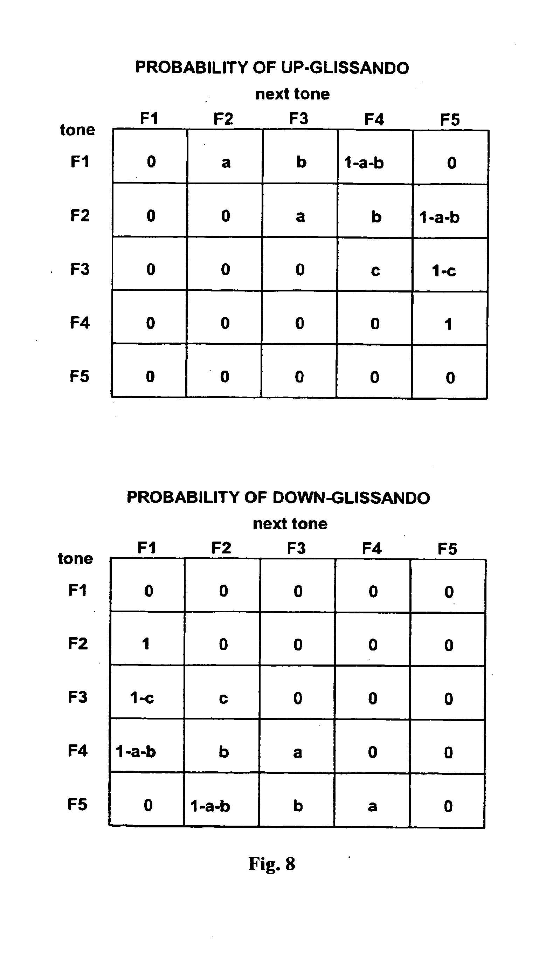

Two tables in Fig. 8 show simplified probability matrices resulting from the assumptions of glissando symmetry.

In accordance with a further aspect of the invention, glissando probabilities Pij may all be changed to a different set of values during the operation of the system. Such a change may occur at time instants selected in a random, preferably non-deterministic, way (at intervals exceeding the duration of a plurality of signal portions). This additional random mechanism of 'matrix switching' makes automotive FMCW radar constructed in accordance with the invention even more resistant to multi-user in-band interference.

In order to maximize the overall unpredictability of the system, the time intervals between 'matrix switching' may follow an exponential distribution. For example, for a selected interval duration $T_G$ = 4 ms, the mean value of the exponential distribution may be chosen to be greater than 100 $T_G$, e.g., one second. Both hardware and software methods of generating exponentially distributed random variables are well known to those skilled in the art.

The use in the present invention of random selection of slope end frequencies according to predetermined probability tables permits better exploitation of the frequency/time space than arrangements such as, e.g., US-A-5345470, while providing in preferred arrangements other benefits resulting from the use of alternating up/down slopes and the use of only a single randomly-selected parameter enabling a simpler implementation.

BRIEF DESCRIPTION OF THE DRAWINGS

Fig. 1 is a simplified functional block diagram of a prior art FMCW automotive radar system.

Fig. 2a) shows schematically linear frequency variations of the transmitted and the received waveforms used in the system of Fig. 1, and also the resulting beat frequency.

Fig. 2b) depicts schematically linear frequency variations of the transmitted and the received waveforms, and also the resulting beat frequency in the case, when a received waveform is delayed and Doppler-shifted with respect to the transmitted waveform.

Fig. 3 is an example of a pattern of frequency variation derived using the techniques of the present invention and suitable for a multi-user automotive FMCW radar system.

Fig. 4 depicts schematically a method of determining allowed next tones for some selected tones when using a method according to the present invention.

Fig. 5 is a flowchart showing the type and order of operations used to derive a sequence of tones in a method of the present invention.

Fig. 6 depicts allowed up-glissandos and down-glissandos along with corresponding probabilities that can be used for the design of a frequency walk in accordance with the invention.

Fig. 7 shows, in a matrix form, probabilities with which allowed up-glissandos and down-glissandos are to be selected.

Fig. 8 shows simplified probability matrices resulting from the assumptions of glissando symmetry.

Fig. 9 is a functional block diagram of a digital glissando controller GTR constructed in accordance with the invention.

Fig. 10 shows schematically the empirical histograms of tones and slopes obtained for different sets of thresholds values.

Fig. 11 depicts examples of trajectories of frequency walks constructed in accordance with the invention.

Fig. 12 is an example of the application of a digital glissando controller GTR constructed in accordance with the invention to an automotive multi-user FMCW radar system.

Figs. 13 and 14 show two further examples of patterns of frequency variation derived using the techniques of the present invention, these examples including signal portions with non-linear frequency/time slopes.

DETAILED DESCRIPTION OF THE PREFERRED EMBODIMENT

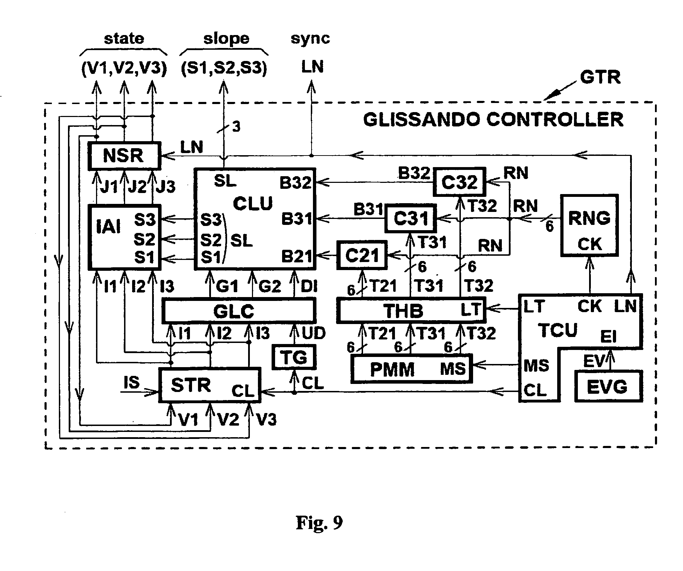

Fig. 9 is a functional block diagram of a digital glissando controller GTR constructed in accordance with the invention. The controller GTR comprises the following blocks and circuits:

- a timing/control unit TCU
- a random event generator EVG
- a 6-bit random number generator RNG
- three comparators, C21, C31 and C32
- a probability matrix memory PMM
- a thresholds buffer THB
- a state register STR and a next-state register NSR
- a 'toggle' flip-flop TG
- a glissando logic circuit GLC
- a combinatorial logic unit CLU
- an adder IAI.

The 6-bit random number generator RNG employed by the controller GTR may be of the kind disclosed in US-A-6751639, or it may be of any other suitable kind.

The glissando controller GTR operates as follows. A 6-bit random number RN is produced by the random number generator RNG in response to every clock pulse CK supplied by the timing/control unit TCU. Each random number RN is compared in the three comparators, C21, C31 and C32, with three predetermined thresholds, T21, T31 and T32. As a result, each comparator produces a binary (Bernoulli) random variable indicative of whether or not a respective threshold has been exceeded by the random number RN.

Such obtained binary random variables, B21, B31 and B32, are then utilized in the combinatorial logic unit CLU to determine which one of allowed glissandos will be employed to make a transition from a current tone to a next tone. For example, if the current tone is F2, then the allowed glissandos are as follows:

- one down-glissando with slope 1, corresponding to a transition from F2 to tone F1

- three up-glissandos with respective slopes, 1 or 2 or 3, each corresponding to a transition from tone F2 to either tone F3 or tone F4 or tone F5

The glissando direction, up or down, is always opposite to the direction of the preceding glissando so that a signal with a required zigzag appearance can be generated. For each tone, the number of allowed glissandos (one, two, or three) is supplied by two binary inputs G1 and G2, and a glissando direction is given by a binary input DI.

Glissandos are selected at random from the allowed set. However, if there is just one allowed glissando, for example to move from tone F2 to tone F1, then no random mechanism is involved (the transition must occur with probability one).

If two glissandos are allowed, with slope 1 or slope 2, then the selected slope will depend on the condition:

If RN > T21, then select slope 2; otherwise select slope 1.

If three glissandos are allowed, with slope 1 or slope 2 or slope 3, then the selected slope will depend on the condition:

If RN $\leq$ T31, then select slope 1, otherwise: if T31 < RN $\leq$ T32, select slope 2, or ifRN > T32 select slope 3.

As seen, different slopes appear with different probabilities, depending on the chosen values of the thresholds, T21, T31 and T32. A selected slope SL, its value and direction, is supplied at outputs (S1,S2,S3) of the combinatorial logic unit CLU; this selected slope is then added in the adder IAI to a current state (I1,I2,I3) to produce a next state (J1,J2,J3). Additionally, the slope parameters are available at output SL to be utilized in a suitable digital signal processor.

For each tone, the number of allowed glissandos (one, two, or three) is determined by the glissando logic circuit GLC. The circuit combines information regarding a current tone, provided by the state register STR at outputs (I1,I2,I3), with information regarding a required glissando direction (up or down), provided by the 'toggle' flip-flop TG at output UD.

A next tone (V1,V2,V3) is loaded, and then held in the next-state register NSR, in response to a signal LN supplied by the timing/control unit TCU. Because the glissando controller GTR operates continually, a next tone becomes a current tone and as such is loaded into the state register STR in response to a clock pulse CL; this same clock pulse reverses the state of the 'toggle' flip-flop TG.

Signal LN is also available at output LN to be utilized as a synchronizing pulse in a suitable digital signal processor.

The operation of the glissando controller GTR is initiated by loading, via input IS, an initial state to the state register STR. If the loaded initial state is either 2, 3 or 4, then the controller GTR is self-starting (because either of the directions, up or down, can be used).

The arrangement described above results in an operation in which the start frequency and slope direction, in combination with the random selection of slope magnitude, determine the end frequency. The probability of a given end frequency being selected is thus dependent on the start frequency and slope direction, and on the threshold values T21, T31 and T32.

From the above description it follows that an important element of the glissando controller design is a judicious selection of the three threshold values T21, T31 and T32. There are several design criteria that may be taken into account. For example, it may be required that the three slopes occur with equal probabilities 1/3; or it may be of interest to maintain the same probability 1/5 for the five used tones, etc.

Different sets of threshold values {(T21,T31,T32)} are stored in the probability matrix memory PPM. Any available set (T21,T31,T32) is selected via input MS by the timing/control unit TCU; the set is loaded into the thresholds buffer THB in response to an LT signal supplied by the timing/control unit TCU.

During its operation, the glissando controller GTR may use different sets of thresholds {(T21,T31,T32)} in order to increase resistance to multi-user in-band interference. For this purpose, the timing/control unit TCU employs the event generator EVG to obtain time marks at output EV that may occur at deterministic or non-deterministic time intervals.

From probabilistic considerations, it follows that inter-event time intervals should have preferably an exponential distribution to emulate a Poisson point process. One practical solution would be to employ a linear-feedback shift register with pseudorandom characteristics, and use each state transition of a generated binary waveform as an event. Other techniques of generating suitable random or pseudorandom events are well known to those skilled in the art.

As an illustrative example, three sets of thresholds {(T21,T31,T32)} will now be presented along with the achieved characteristics of the glissando controller GTR constructed in accordance with the invention.

*Case A* First, suppose that it is desirable to have three slopes occurring with equal probability of 1/3.

A six-bit random number RN can assume each of 64 integer values $0 \leq RN \leq 63$ with the same probability 1/64. When the threshold values are selected as: T21 = 24, T31 = 14 and T32 = 33, each of the three slopes will occur with the same probability 1/3. However, the probability of each *tone* is different: P(F1) = P(F5) = 0.18, P(F2) = P(F4) = 0.22 and P(F3) = 0.2.

*Case B* Suppose now that equal probability, 1/5, of each of the five tones is required. In this case, the threshold values should be chosen as: T21 = 12, T31 = 22 and T32 = 39. Although the tone probabilities are equal, the slope probabilities are now all different: P(SL=1) = 0.42, P(SL = 2) = 0.33 and P(SL = 3) = 0.25.

*Case C* In some applications, it may be required to reduce the probability of occurrence of one of the slopes. For example, selecting the thresholds as: T21 = 59, T31 = 20 and T32 = 21, will result in the following slope probabilities: P(SL =1) = P(SL = 3) = 0.49, and P(SL = 2) = 0.02. In this case, the tone probabilities will be as follows: P(F1) = P(F5) = 0.19, P(F2) = P(F4) = 0.25 and P(F3) = 0.12.

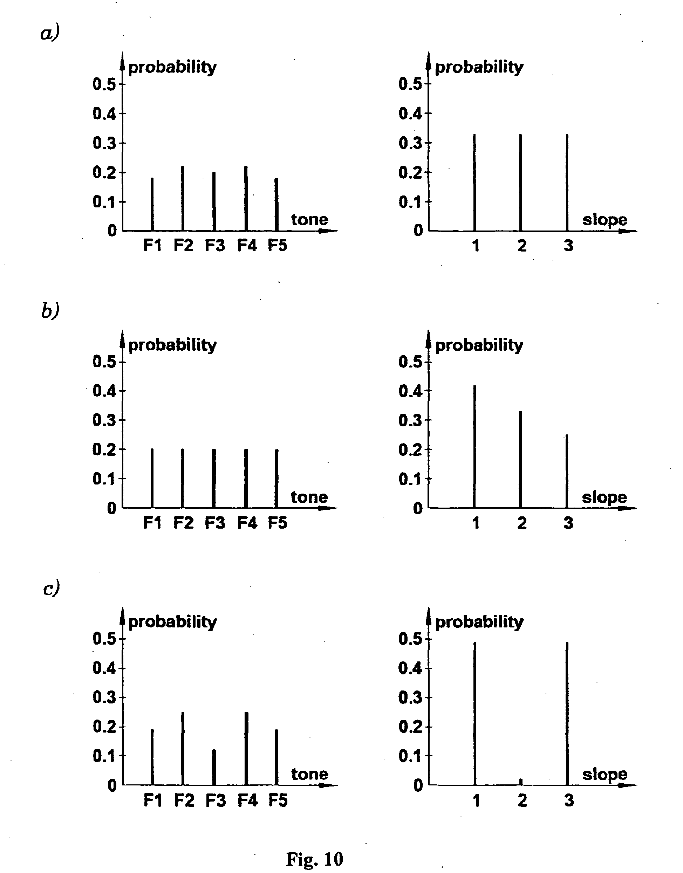

Fig. 10 shows schematically the empirical histograms of tones and slopes obtained for each of the above cases, and Fig. 11 depicts examples of trajectories of corresponding frequency walks. For illustrative purposes, the frequency of the tones and time intervals are expressed in practically useful units. As seen, different values of tone and slope probabilities result in different appearance of the trajectories.

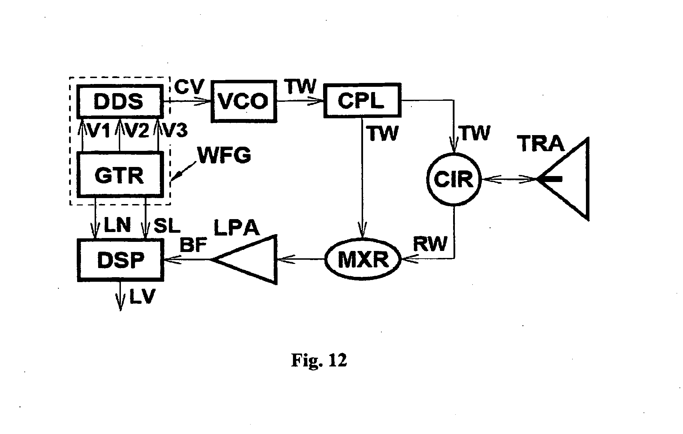

Fig. 12 is an example of the application of a digital glissando controller GTR constructed in accordance with the invention to automotive FMCW radar. In the example shown, the waveform generator of Fig. 1 has been replaced by a subsystem comprising the glissando generator GTR and a direct digital synthesizer DDS. In response to successive tones supplied by the glissando generator GTR at outputs V1, V2 and V3, the synthesizer DDS produces a corresponding signal CV to drive the voltage-controlled oscillator VCO. The glissando controller GTR also supplies to the digital signal processor DSP a synchronizing signal LN and a signal SL indicative of the value and direction of the slopes.

The digital signal processor DSP may operate in the same way as the signal processor DSP of the prior art shown in Fig. 1, except that the range is calculated to be proportional to the ratio of the beat frequency to the (variable) slope (rather than, as in the prior art arrangement where the slope is constant, being merely proportional to the beat frequency). The magnitude of the slope is indicated by the signal SL. Also, it is preferred that the estimated values of range L and velocity V produced as output LV be determined by integration of signals received over a plurality of signal slopes, for example using a sliding-window arrangement which operates by counting the synchronizing signal pulses LN (resulting in a count n corresponding to that mentioned above in connection with Fig. 5).

It is to be noted that although in the preferred embodiment the object velocity is calculated by determining the Doppler frequency in the received signal, this is not essential to the invention.

Throughout the present specification, including the claims, except where the context indicates otherwise, the term "random" is intended to cover not only purely random, non-deterministically generated signals, but also pseudorandom signals (which are random in appearance but reproducible by deterministic means) such as the output of a shift register arrangement provided with a feedback circuit as used in the prior art to generate pseudorandom binary signals, and chaotic signals.

The foregoing description of preferred embodiments of the invention has been presented for the purpose of illustration and description. It is not intended to be exhaustive or to limit the invention to the precise form disclosed. In light of the foregoing description, it is evident that many alterations, modifications, and variations will enable those skilled in the art to utilize the invention in various embodiments suited to the particular use contemplated.

For example, in the embodiment described above, each slope was selected on a random basis by selecting the start frequency to be equal to the randomly-selected end frequency of the preceding portion and carrying out a new random selection of the end frequency. However, various alternatives are possible such as:

(i) Although it is preferred for the start frequency of each signal portion to be equal to the end frequency of the preceding signal portion, this is not essential. Instead there could be a discrete jump (up or down) between the end frequency of one portion and the start frequency of the next portion, leading to a discontinuous signal. The frequency jump may be fixed, or variable according to a predetermined pattern, or random within certain limits. The start frequency will therefore be determined according to the preceding end frequency, in that it will have a value dependent on the end frequency, although it will not necessarily be equal to it. Because it will take the circuitry a finite time to settle at the new frequency, it may be desirable to construct a gap between successive signal portions. There may be some advantage in providing gaps of randomly-selected length to increase further the resistance to interference.

(ii) It is noted also that the embodiment described above successively determines the parameters of signal portions in the order in which the signal portions are transmitted. Although preferred, this is not essential. For example, the signal portions can be constructed in advance, prior to any transmission, in which case they could be designed in reverse order such that each signal end frequency is calculated, to equal the start frequency of the next-transmitted signal portion. The terms "start frequency" and "end frequency" as used in the present description and claims should therefore be interpreted as relating to the direction (in time) of signal construction, which may be the same as, or opposite to, the direction (in time) of signal transmission.

(iii) Generally, it is preferred to use a buffer so that the signal frequency excursions can be determined in advance of when they are to be used. In some cases it may be desirable to provide a mechanism for examining the sequence of local peaks and valleys for certain conditions (e.g. rapidly repeating patterns of frequency extrema) and in response altering the calculated sequence (e.g. by removing part of it).

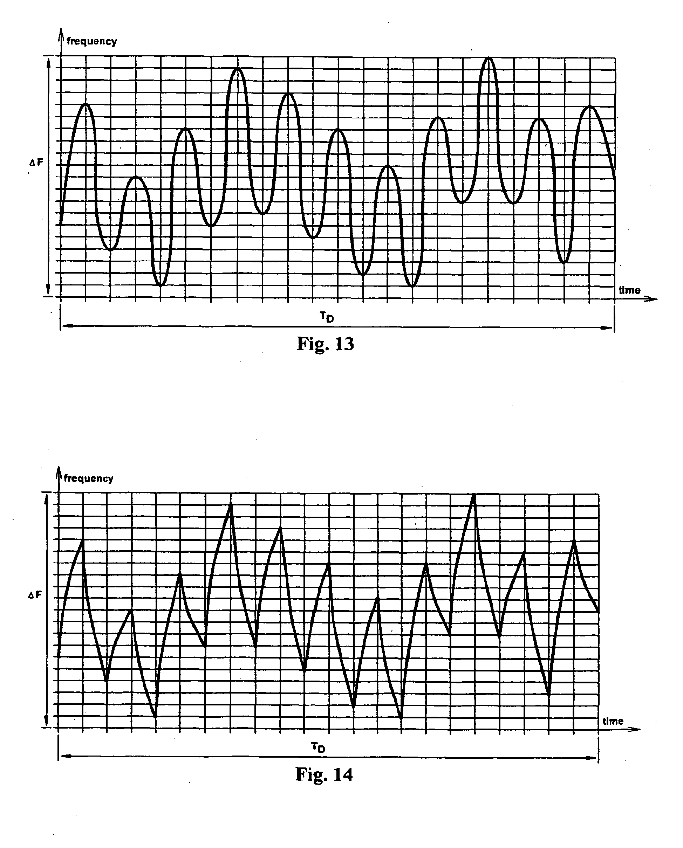

(iv) It is possible to use non-linear signal portions such as the meandering, sinusoidal-like pattern shown in Fig. 13, or logarithmic or exponential frequency/time curves like those of Fig. 14. It is also possible to use piecewise-linear curves exhibiting monotonic frequency changes, or staircase frequency/time curves, for example including periods of constant frequency.

(v) To further reduce interference, the pattern of local frequency extrema could be repeatedly shifted up and down (at possibly random intervals exceeding the duration of a plurality of signal portions), either by altering the selectable predetermined frequencies or by using different probability tables.

The invention is applicable to other types of radar than the one described above, including radars which use quite different frequency bands. The invention is applicable as well to radar systems in which the transmission is repeatedly interrupted (FMICW). Also, the invention is applicable to other types of systems than those which transmit electromagnetic radiation, for example acoustic or ultrasonic imaging applications, with appropriate scaling and selection of the various signal parameters, although the invention is of particular benefit when used in applications which can exploit the improved interference-rejection behaviour of the invention, such as sonar systems.

**Claims**

1. A method of detecting an object, the method comprising transmitting a varying-frequency signal, detecting the reflection of the signal from the object, and determining the range of the object from the difference between the frequencies of the transmitted signal and its reflection, the signal comprising successive portions each with a frequency extending between a local frequency peak and a local frequency valley, wherein:

   signal portions of increasing frequency alternate with signal portions of decreasing frequency; and
   each signal portion extends from a start frequency selected according to the end frequency of the preceding signal portion to an end frequency selected at random from a predetermined set of frequencies each having a corresponding set of probabilities, the selection probabilities for each said frequency being dependent on said start frequency and on the slope direction of the preceding signal portion.

2. A method as claimed in claim 1, in which the predetermined set of frequencies include frequencies which have corresponding selection probabilities which vary between different non-zero values depending on the start frequency for a given slope direction of the preceding signal portion.

3. A method as claimed in claim 1 or claim 2, in which each signal portion has a start frequency equal to the end frequency of the preceding signal portion.

4. A method as claimed in any preceding claim, wherein the probabilities for each said frequency are dependent only on said start frequency and on the slope direction of the preceding signal portion, whereby the local frequency peaks and valleys of the signal form a Markov chain.

5. A method as claimed in any preceding claim, in which the random selection is constrained such that the local frequency peaks and valleys of the signal do not fall outside a predetermined range.

6. A method as claimed in any preceding claim, in which the random selection is constrained such that the each signal portion has a slope whose magnitude does not exceed a predetermined value.

7. A method as claimed in any preceding claim, arranged such that the absolute magnitude of the difference between the local peak and the local valley of each signal portion is always greater than a further predetermined value.

8. A method as claimed in any preceding claim, wherein the set of probabilities is such as to cause each predetermined frequency to be selected, on average, with equal probability.

9. A method as claimed in any one of claims 1 to 7, wherein the set of probabilities is such as to cause, on average, the different magnitudes of the frequency ranges of the signal portions to be selected with equal probability.

10. A method as claimed in any one of claims 1 to 7, wherein the set of probabilities is such as to cause, on average, the different magnitudes of the frequency ranges of the signal portions to be selected with non-equal probabilities having predetermined relationships with each other.

11. A method as claimed in any preceding claim, including the step of repeatedly changing values which determine the probabilities of said sets at intervals exceeding the duration of a plurality of signal portions.

12. A method as claimed in claim 11, wherein the step of changing values is performed at random intervals.

13. A method as claimed in any preceding claim, including the step of repeatedly changing the predetermined set of frequencies at intervals exceeding the duration of a plurality of signal portions.

14. A method as claimed in any preceding claim, wherein the signal portions have a linear frequency/time slope.

15. A method as claimed in any preceding claim, wherein the signal portions have a non-linear frequency/time slope.

16. A method as claimed in claim 15, wherein the signal portions have a piecewise-linear frequency/time slope.

17. A method as claimed in claim 15 or 16, wherein the signal portions have staircase frequency/time slopes.

18. A method as claimed in any preceding claim, wherein the signal portions are of uniform duration.

19. A method as claimed in any one of claims 1 to 17, wherein the signal portions are of varying duration.

20. A method as claimed in any preceding claim, including the step of determining the velocity of the object from the resultant Doppler frequency.

21. Apparatus arranged to operate according to a method as claimed in any preceding claim.

22. Apparatus as claimed in claim 21, including a random number generator, a comparator arrangement for comparing the output of the random number generator with a plurality of predetermined thresholds, and a selector which selects the end frequency of a signal portion in dependence on the relationship between the random number generator output and the thresholds

23. Apparatus as claimed in claim 22, wherein the apparatus further includes means for changing the thresholds.


**Patentansprüche**

1. Verfahren zum Erkennen eines Objekts, wobei das Verfahren umfasst: das Senden eines Signals variierender Frequenz, das Erfassen der Reflexion des Signals von dem Objekt und das Ermitteln der Entfernung des Objekts aus der Differenz zwischen der Frequenz des gesendeten Signals und seiner Reflexion, wobei das Signal aufeinander folgende Abschnitte umfasst, deren Frequenz jeweils zwischen einer lokalen Frequenzspitze und einem lokalen Frequenztal verläuft, wobei:

   Signalabschnitte ansteigender Frequenz sich mit Signalabschnitten fallender Frequenz abwechseln, und

   wobei jeder Signalabschnitt ausgehend von einer Startfrequenz - ausgewählt entsprechend der Endfrequenz des vorangehenden Signalabschnitts - zu einer Endfrequenz verläuft, die zufällig aus einer vorgegebenen Gruppe von Frequenzen ausgewählt wird, von denen jede eine zugehörige Gruppe von Wahrscheinlichkeiten aufweist, wobei die Auswahlwahrscheinlichkeiten für jede der genannten Frequenzen von der Startfrequenz und der Steigungsrichtung des vorangehenden Signalabschnitts abhängen.

2. Verfahren nach Anspruch 1, wobei die vorgegebene Gruppe von Frequenzen Frequenzen umfasst, die übereinstimmende Auswahlwahrscheinlichkeiten aufweisen, die abhängig von der Startfrequenz für eine gegebene Steigungsrichtung des vorangehenden Signalabschnitts zwischen unterschiedlichen Werten ungleich Null variieren.

3. Verfahren nach Anspruch 1 oder Anspruch 2, wobei jeder Signalabschnitt eine Startfrequenz aufweist, die gleich der Endfrequenz des vorangehenden Signalabschnitts ist.

4. Verfahren nach einem der vorangehenden Ansprüche, wobei die Wahrscheinlichkeiten für jede Frequenz nur von der Startfrequenz und der Steigungsrichtung des vorangehenden Signalabschnitts abhängen, und wobei die lokalen Spitzen und Täler des Signals eine Markov-Kette bilden.

5. Verfahren nach einem der vorangehenden Ansprüche, wobei die Zufallsauswahl derart eingeschränkt ist, dass die lokalen Frequenzspitzen und -täler des Signals sich nicht außerhalb eines vorgegebenen Bereichs befinden.

6. Verfahren nach einem der vorangehenden Ansprüche, wobei die Zufallsauswahl derart eingeschränkt ist, dass die Größe der Steigung jedes Signalabschnitts einen vorgegebenen Wert nicht übersteigt.

7. Verfahren nach einem der vorangehenden Ansprüche, das so eingerichtet ist, dass die absolute Größe der Differenz zwischen der lokalen Spitze und dem lokalen Tal jedes Signalabschnitts immer größer als ein weiterer vorgegebener Wert ist.

8. Verfahren nach einem der vorangehenden Ansprüche, wobei die Gruppe von Wahrscheinlichkeiten von einer Art ist, die bewirkt, dass im Durchschnitt jede vorgegebene Frequenz mit gleicher Wahrscheinlichkeit ausgewählt wird.

9. Verfahren nach einem der Ansprüche 1 bis 7, wobei die Gruppe von Wahrscheinlichkeiten von einer Art ist, die bewirkt, dass im Durchschnitt die unterschiedlichen Größen der Frequenzbereiche der Signalabschnitte mit gleicher Wahrscheinlichkeit ausgewählt werden.

10. Verfahren nach einem der Ansprüche 1 bis 7, wobei die Gruppe von Wahrscheinlichkeiten von einer Art ist, die bewirkt, dass im Durchschnitt die unterschiedlichen Größen der Frequenzbereiche der Signalabschnitte mit ungleichen Wahrscheinlichkeiten ausgewählt werden, die in vorgegebenen Verhältnissen zueinander stehen.

11. Verfahren nach einem der vorangehenden Ansprüche, das folgenden Schritt umfasst: das wiederholte Ändern der Werte, die die Wahrscheinlichkeiten für die genannten Gruppen in Intervallen bestimmen, deren Dauer die Dauer mehrerer Signalabschnitte übersteigt.

12. Verfahren nach Anspruch 11, wobei der Schritt des Änderns der Werte in zufälligen Intervallen ausgeführt wird.

13. Verfahren nach einem der vorangehenden Ansprüche, das folgenden Schritt umfasst: das wiederholte Ändern der vorgegebenen Gruppe von Frequenzen in Intervallen, deren Dauer die Dauer mehrerer signalabschnitte übersteigt.

14. Verfahren nach einem der vorangehenden Ansprüche, wobei die Signalabschnitte eine lineare Frequenzsteigung/ einen linearen Zeitverlauf aufweisen.

15. Verfahren nach einem der vorangehenden Ansprüche, wobei die Signalabschnitte eine nicht lineare Frequenzsteigung/einen nicht linearen Zeitverlauf aufweisen.

16. Verfahren nach Anspruch 15, wobei die Signalabschnitte eine stückweise lineare Frequenzsteigung/einen stückweise linearen Zeitverlauf aufweisen.

17. Verfahren nach Anspruch 15 oder 16, wobei die Signalabschnitte gestufte Frequenzsteigungen/Zeitverläufe aufweisen.

18. Verfahren nach einem der vorangehenden Ansprüche, wobei die Signalabschnitte von gleicher Dauer sind.

19. Verfahren nach einem der Ansprüche 1 bis 17, wobei die Signalabschnitte von unterschiedlicher Dauer sind.

20. Verfahren nach einem der vorangehenden Ansprüche, das folgenden Schritt umfasst: das Ermitteln der Geschwindigkeit des Objekts aus der resultierenden Doppler-Frequenz.

21. Vorrichtung, die dafür eingerichtet ist, gemäß einem in einem der vorangehenden Ansprüche beschriebenen Verfahren zu arbeiten.

22. Vorrichtung nach Anspruch 21 umfassend einen Zufallszahlengenerator, eine Komparatoranordnung zum Vergleichen der Ausgabe des Zufallszahlengenerators mit einer Mehrzahl vorgegebener Schwellenwerte und einen Selektor, der die Endfrequenz eines Signalabschnitts in Abhängigkeit von dem Verhältnis zwischen der Ausgabe des Zufallszahlengenerators und den Schwellenwerten auswählt.

23. Vorrichtung nach Anspruch 22, wobei die Vorrichtung weiter Einrichtungen zum Ändern der Schwellenwerte umfasst.

**Revendications**

1. Procédé destiné à détecter un objet, le procédé comprenant les étapes consistant à émettre un signal de fréquence variable, détecter la réflexion du signal par l'objet, et déterminer la distance de l'objet à partir de la différence entre les fréquences du signal émis et de la réflexion de celui-ci, le signal comprenant des parties successives, chacune d'elles présentant une fréquence qui s'étend entre une crête de fréquence locale et une vallée de fréquence locale, dans lequel :

   des parties de signal de fréquence croissante alternent avec des parties de signal de fréquence décroissante ; et chaque partie de signal s'étend à partir d'une fréquence de début sélectionnée selon la fréquence de fin de la partie de signal précédente vers une fréquence de fin sélectionnée au hasard à partir d'un ensemble prédéterminé de fréquences, chacune d'elles présentant un ensemble correspondant de probabilités, les probabilités de sélection de chaque dite fréquence dépendant de ladite fréquence de début et de la direction de la pente de la partie de signal précédente.

2. Procédé selon la revendication 1, dans lequel l'ensemble prédéterminé de fréquences comprend des fréquences qui présentent des probabilités de sélection correspondantes qui varient entre des valeurs non nulles différentes selon la fréquence de début pour une direction de pente donnée de la partie de signal précédente.

3. Procédé selon la revendication 1 ou la revendication 2, dans lequel chaque partie de signal présente une fréquence de début égale à la fréquence de fin de la partie de signal précédente.

4. Procédé selon l'une quelconque des revendications précédentes, dans lequel les probabilités de chaque dite fréquence dépendent seulement de ladite fréquence de début et de la direction de la pente de la partie de signal précédente, grâce à quoi les crêtes et les vallées de fréquences locales du signal forment une chaîne de Markov.

5. Procédé selon l'une quelconque des revendications précédentes, dans lequel la sélection aléatoire est contrainte de telle sorte que les crêtes et les vallées de fréquences locales ne tombent pas à l'extérieur d'une plage prédéterminée.

6. Procédé selon l'une quelconque des revendications précédentes, dans lequel la sélection aléatoire est contrainte de telle sorte que chaque partie de signal présente une pente dont la grandeur ne dépasse pas une valeur prédéterminée.

7. Procédé selon l'une quelconque des revendications précédentes, agencé de telle sorte que la grandeur absolue de la différence entre la crête locale et la vallée locale de chaque partie de signal soit toujours supérieure à une autre valeur prédéterminée.

8. Procédé selon l'une quelconque des revendications précédentes, dans lequel l'ensemble de probabilités est tel que chaque fréquence prédéterminée est sélectionnée, en moyenne, avec une probabilité égale.

9. Procédé selon l'une quelconque des revendications 1 à 7, dans lequel l'ensemble de probabilités sert à sélectionner, en moyenne, les différentes grandeurs des plages de fréquence des parties de signal avec une probabilité égale.

10. Procédé selon l'une quelconque des revendications 1 à 7, dans lequel l'ensemble de probabilités sert à sélectionner, en moyenne, les différentes grandeurs des plages de fréquence des parties de signal avec des probabilités différentes qui présentent des relations prédéterminées les unes avec les autres.

11. Procédé selon l'une quelconque des revendications précédentes, comprenant l'étape consistant à modifier à plusieurs reprises des valeurs qui déterminent les probabilités desdits ensembles à des intervalles qui dépassent la durée d'une pluralité de parties de signal.

12. Procédé selon la revendication 11, dans lequel l'étape consistant à modifier des valeurs est exécutée à des intervalles aléatoires.

13. Procédé selon l'une quelconque des revendications précédentes, comprenant l'étape consistant à modifier à plusieurs reprises l'ensemble prédéterminé de fréquences à des intervalles qui dépassent la durée d'une pluralité de parties de signal.

14. Procédé selon l'une quelconque des revendications précédentes, dans lequel les parties de signal présentent une pente fréquence / temps linéaire.

15. Procédé selon l'une quelconque des revendications précédentes, dans lequel les parties de signal présentent une pente fréquence / temps non linéaire.

16. Procédé selon la revendication 15, dans lequel les parties de signal présentent une pente fréquence / temps linéaire en partie.

17. Procédé selon la revendication 15 ou la revendication 16, dans lequel les parties de signal présentent des pentes fréquence / temps en escalier.

18. Procédé selon l'une quelconque des revendications précédentes, dans lequel les parties de signal présentent une durée uniforme.

19. Procédé selon l'une quelconque des revendications 1 à 17, dans lequel les parties de signal présentent une durée variable.

20. Procédé selon l'une quelconque des revendications précédentes, comprenant l'étape consistant à déterminer la vitesse de l'objet à partir de la fréquence Doppler résultante.

21. Appareil agencé de manière à fonctionner selon un procédé selon l'une quelconque des revendications précédentes.

22. Appareil selon la revendication 21, comprenant un générateur de nombres aléatoires, un agencement de comparateur destiné à comparer la sortie du générateur de nombres aléatoires à une pluralité de seuils prédétermines, et un sélecteur qui sélectionne la fréquence de fin d'une partie de signal en fonction de la relation qui existe entre la sortie du générateur de nombres aléatoires et les seuils.

23. Appareil selon la revendication 22, dans lequel l'appareil comprend en outre des moyens destinés à modifier les seuils.

**Fig. 1 – PRIOR ART**

Fig. 2 – PRIOR ART

**Fig. 3**

**Fig. 4**

```
          ( Start )
              |
              v
       +----------------+
       | Set:           | DIR=+1 for direction up
       | n ← 1          | DIR=-1 for direction down
       | DIR ← +1       | Fm is one of middle states
       | Fi ← Fm        |
       +----------------+
              |
              v
       +----------------------+
       | List all allowed next states
       | {Fj} for Fi and DIR  |
       +----------------------+
              |
              v
 +----------+ +----------------------+
 | Set:     | | List probabilities {Pij}
 | Fi ← Fj  | |  of choosing Fj       |
 | DIR ←-DIR| +----------------------+
 | n ← n+1  |        |
 +----------+        v
       ^      +----------------------+
       |      | Choose at random Fj  |
       |      | with probability Pij |
       |      +----------------------+
       |              |
       +--------------+
              |
              v
       +----------------+
       | Output: n, Fi, Fj |
       +----------------+
```

**Fig. 5**

**UP-GLISSANDOS**

**DOWN-GLISSANDOS**

**Fig. 6**

## PROBABILITY OF UP-GLISSANDO
### next tone

| tone | F1 | F2 | F3 | F4 | F5 |
|---|---|---|---|---|---|
| F1 | 0 | P12 | P13 | P14 | 0 |
| F2 | 0 | 0 | P23 | P24 | P25 |
| F3 | 0 | 0 | 0 | P34 | P35 |
| F4 | 0 | 0 | 0 | 0 | 1 |
| F5 | 0 | 0 | 0 | 0 | 0 |

P12 + P13 + P14 = 1

P23 + P24 + P25 = 1

P34 + P35 = 1

## PROBABILITY OF DOWN-GLISSANDO
### next tone

| tone | F1 | F2 | F3 | F4 | F5 |
|---|---|---|---|---|---|
| F1 | 0 | 0 | 0 | 0 | 0 |
| F2 | 1 | 0 | 0 | 0 | 0 |
| F3 | P31 | P32 | 0 | 0 | 0 |
| F4 | P41 | P42 | P43 | 0 | 0 |
| F5 | 0 | P52 | P53 | P54 | 0 |

P31 + P32 = 1

P41 + P42 + P43 = 1

P52 + P53 + P54 = 1

**Fig. 7**

## PROBABILITY OF UP-GLISSANDO

### next tone

| tone | F1 | F2 | F3 | F4 | F5 |
|---|---|---|---|---|---|
| F1 | 0 | a | b | 1-a-b | 0 |
| F2 | 0 | 0 | a | b | 1-a-b |
| F3 | 0 | 0 | 0 | c | 1-c |
| F4 | 0 | 0 | 0 | 0 | 1 |
| F5 | 0 | 0 | 0 | 0 | 0 |

## PROBABILITY OF DOWN-GLISSANDO

### next tone

| tone | F1 | F2 | F3 | F4 | F5 |
|---|---|---|---|---|---|
| F1 | 0 | 0 | 0 | 0 | 0 |
| F2 | 1 | 0 | 0 | 0 | 0 |
| F3 | 1-c | c | 0 | 0 | 0 |
| F4 | 1-a-b | b | a | 0 | 0 |
| F5 | 0 | 1-a-b | b | a | 0 |

Fig. 8

**Fig. 9**

Fig. 10

a)

b)

c)

**Fig. 11**

**Fig. 12**

Fig. 13

Fig. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5923280 A
- US 20040130482 A
- US 5345470 A
- US 3109172 A
- US 6751639 A

### Non-patent literature cited in the description

- **DAVID RICHARDSON.** An FMCW radar sensor for collision avoidance. *IEEE Conference on Intelligent Transportation System, ITSC-97,* 09 November 1997, 427-432
- **GRAHAM M. BROOKER.** Mutual Interference of Millimeter-Wave Radar Systems. *IEEE Transactions on Electromagnetic Compatibility, EC-49,* February 2007, 170-181